# EUROPEAN PATENT APPLICATION

(11) **EP 4 407 752 A1**
(43) Date of publication of application: **31.07.2024**
(21) Application number: 22922717.8
(22) Date of filing: 27.01.2022
(51) Int. Cl.: H01M 10/615

(54) **CHARGING DEVICE AND METHOD FOR HEATING BATTERY**

(71) Applicant: Contemporary Amperex Technology Co., Limited, Ningde City, Fujian PRC 352100 (CN)
(72) Inventor: LI, Zhanliang, Ningde, Fujian 352100 (CN); ZHAO, Yuanmiao, Ningde, Fujian 352100 (CN); YAN, Yu, Ningde, Fujian 352100 (CN); CHEN, Xinwei, Ningde, Fujian 352100 (CN); ZUO, Xiyang, Ningde, Fujian 352100 (CN); HUANG, Xiaojian, Ningde, Fujian 352100 (CN); DAN, Zhimin, Ningde, Fujian 352100 (CN)
(74) Representative: Rowlands, Stuart Michael
(86) International application number: PCT/CN2022/074286
(87) International publication number: WO 2023/141870

(57) **Abstract**

The present application discloses a charging device, comprising: a direct current source; a bidirectional direct current converter, connected between the direct current source and charging ports of the charging device; a pulse heating module, connected to the bidirectional direct current converter in parallel; and a controller, configured to: upon receipt of a heating request, select, according to the heating frequency requirement of a battery, either of the pulse heating module and the bidirectional direct current converter to heat the battery. The present application also relates to a method for heating a battery and a storage medium.

## Description

### Technical Field

The present invention relates to the technical field of batteries, and in particular, to a charging apparatus and a method for heating a battery.

### Background

With the development of new energy technologies, more and more fields use batteries as power. Due to the advantages of high energy density, recyclable charging, safety and environmental protection, batteries are widely applied in the fields of new energy vehicles, consumer electronics, energy storage systems, and the like.

However, the use of batteries in low-temperature environments may be limited to a certain extent. Specifically, in a low-temperature environment, the charging and discharging capacity of a battery will be seriously attenuated, and charging and discharging the battery will also lead to the life attenuation in the whole life cycle, and charging the battery may even lead to irreversible damage to the battery. Therefore, in order to enable the normal use of a battery, it is necessary to heat the battery in a low-temperature environment.

### Summary of the Invention

In view of the aforementioned problems, the present application proposes a charging apparatus and a method for heating a battery to solve the problem that restricted use of batteries in a low-temperature environment.

To this end, a first aspect of the present invention provides a charging apparatus, the charging apparatus including:
a direct current (DC) source;
a bidirectional DC converter connected between the aforementioned DC source and a charging port of the charging apparatus;
a pulse heating module connected in parallel with the aforementioned bidirectional DC converter; and
a controller configured for:
   selecting, when a heating request is received and according to a heating frequency requirement of a battery, one of the aforementioned pulse heating module and the aforementioned bidirectional DC converter to heat the battery.

In embodiments of the present application, the charging apparatus is used to heat a low-temperature battery, which can eliminate the need for an in-vehicle battery heating apparatus, thus realizing the pulse rapid heating function of the vehicle at a low temperature without increasing the cost of the vehicle. In addition, in embodiments of the present application, different heating apparatuses are selected according to the heating frequency requirement of the battery to heat the battery at different frequencies, thus enabling the charging apparatus to be applicable to heating various types of batteries.

In some embodiments, the controller is configured for:
when the aforementioned heating frequency requirement is less than a preset first frequency, selecting the aforementioned bidirectional DC converter to heat the battery; and
when the aforementioned heating frequency requirement is greater than or equal to the preset first frequency, selecting the aforementioned pulse heating module to heat the battery.

In embodiments of the present application, pulse heating for the low frequency range is achieved by a bidirectional DC converter, and pulse heating for the high frequency range is achieved by a pulse heating module, thus enabling the charging apparatus to cover the pulse waveform of the full frequency range. In some embodiments of the present application, the preset first frequency is 100 Hz. In addition, in some embodiments of the present application, the maximum frequency to which the aforementioned pulse heating module can be applied is 2 kHz.

In some embodiments, the controller is configured for: when heating of the battery is started, controlling the aforementioned bidirectional DC converter or the aforementioned pulse heating module so that the battery is discharged during the first half of the first cycle of the pulse current for heating the battery.

In embodiments of the present application, by controlling the battery to discharge during the first half of the first cycle, the battery is prevented from lithium plating due to charging at ultra-low temperatures. It should be understood that certain low-temperature battery cells also allow for charging for short periods of time, so in some other embodiments of the present application, the controller may be configured for: when heating of the battery is started, controlling the aforementioned bidirectional DC converter or the aforementioned pulse heating module so that the battery is charged during the first half of the first cycle of the pulse current for heating the battery.

In some embodiments, the controller is configured for: when the heating frequency requirement is less than a preset second frequency, controlling the aforementioned bidirectional DC converter so that energy released by the battery is fed back to the aforementioned DC source during battery discharging, wherein the preset second frequency is less than the preset first frequency.

In embodiments of the present application, because of the use of the bidirectional DC converter, it is possible to feed the electrical energy back to the DC source without storing the energy in the energy storage element of the DC converter, which reduces the requirement for the energy storage element in the DC converter as well as the switching devices.

In some embodiments, the aforementioned DC source includes a bidirectional rectifier connected to the power grid, and the controller is configured for: when the heating frequency requirement is less than a preset second frequency, controlling the aforementioned rectifier and the aforementioned bidirectional DC converter so that energy released by the battery is fed back to the power grid during battery discharging, wherein the preset second frequency is less than the preset first frequency.

In embodiments of the present application, because of the use of the bidirectional rectifier, the electrical energy can be fed back to the power grid; specifically, when the pulse heating current is generated using the bidirectional DC converter, if the pulse frequency is low, the energy is fed back to the power grid through the bidirectional rectifier instead of being stored in the energy storage element of the DC converter, thereby reducing the requirement for the energy storage elements in the rectifier and in the DC converter as well as the switching devices.

In some other embodiments, the above DC source includes an energy storage apparatus. In embodiments of the present application, since the DC source includes an energy storage apparatus, energy may be fed back into the energy storage apparatus for storage when the pulse frequency is low; furthermore, the energy supplied to the battery to be heated may come from the energy storage apparatus without the involvement of a rectifier connected to the power grid. In some specific embodiments of the present application, the aforementioned energy storage apparatus may include an energy storage battery and/or a super-capacitor.

In some embodiments, the controller is configured for: when the heating frequency requirement is greater than or equal to a preset second frequency and less than the preset first frequency, controlling the aforementioned bidirectional DC converter so that energy released by the battery is stored in an energy storage element of the aforementioned bidirectional DC converter during battery discharging, wherein the preset second frequency is less than the preset first frequency.

In some embodiments, the aforementioned DC source includes a rectifier connected to the power grid, the aforementioned charging apparatus is configured for monitoring the voltage of the battery, and the controller is configured for:
when the voltage of the battery is lower than a preset voltage threshold for an initial voltage of the battery, controlling the aforementioned rectifier to recharge the battery, wherein this initial voltage is a voltage when the battery starts to be heated.

In embodiments of the present application, the battery is recharged by a rectifier, making it possible to heat the battery by the pulse current even when the voltage of the battery is low, without resulting in a situation where the battery cannot be heated when the state of charge is low.

In some specific embodiments, when the battery is heated by the aforementioned bidirectional DC converter, the controller is configured for controlling the aforementioned rectifier and the aforementioned bidirectional DC converter to adjust the balance between charging energy and discharging energy for pulse heating of the battery.

In embodiments of the present application, by adjusting the balance between charging energy and discharging energy, it is ensured that the energy stored in the battery does not decrease and the state of charge of the battery does not decrease.

In some specific embodiments, when the battery is heated by the aforementioned pulse heating module, the controller is configured for controlling the aforementioned rectifier so that an output voltage of the aforementioned rectifier is equal to a preset voltage value during charging of the battery by an energy storage element of the aforementioned pulse heating module, the preset voltage value being greater than or equal to the initial voltage of the battery.

In embodiments of the present application, the output voltage of the rectifier is controlled to be greater than or equal to the initial voltage of the battery during charging of the battery, so that during charging, the battery can be replenished with the energy released and consumed, and the battery can reach energy balance during pulse charging and discharging, thus maintaining the voltage of the battery at the initial voltage.

In an embodiment of the present application, the preset voltage value is slightly greater than the initial voltage of the battery.

In some embodiments, the charging apparatus includes a plurality of bidirectional DC converters connected in parallel with each other, and when the heating frequency requirement is less than the preset first frequency, the battery is heated by one or more of the aforementioned plurality of bidirectional DC converters.

In some embodiments, the charging apparatus includes a plurality of pulse heating modules connected in parallel with each other, and when the heating frequency requirement is greater than or equal to the preset first frequency, the battery is heated by one or more of the aforementioned plurality of pulse heating modules.

A second aspect of the present invention provides a method for heating a battery, the method including:
receiving a heating request as well as a heating frequency requirement of a battery; and
in response to the heating request and according to the heating frequency requirement, selecting one of a pulse heating module and a bidirectional DC converter connected between a DC source and the battery to heat the battery.

In embodiments of the present application, different heating apparatuses are selected according to the heating frequency requirement of the battery to heat the battery at different frequencies, thus enabling it to be applicable to heating various types of batteries.

In some embodiments, the method includes:
when the heating frequency requirement is less than a preset first frequency, heating the battery by the aforementioned bidirectional DC converter; and
when the heating frequency requirement is greater than or equal to the preset first frequency, heating the battery by the aforementioned pulse heating module.

In embodiments of the present application, pulse heating for the low frequency range is achieved by a bidirectional DC converter, and pulse heating for the high frequency range is achieved by a pulse heating module, thus enabling it to cover the pulse waveform of the full frequency range. In some embodiments of the present application, the preset first frequency is 100 Hz. In addition, in some embodiments of the present application, the maximum frequency to which the aforementioned pulse heating module can be applied is 2 kHz.

In some embodiments, the method includes:
when heating of the battery is started, controlling the aforementioned bidirectional DC converter or the aforementioned pulse heating module so that the battery is discharged during the first half of the first cycle of the pulse current for heating the battery.

In embodiments of the present application, by controlling the battery to discharge during the first half of the first cycle, the battery is prevented from lithium plating due to charging at ultra-low temperatures. It should be understood that certain low-temperature battery cells also allow for charging for short periods of time, so in some other embodiments of the present application, the controller may be configured for: when heating of the battery is started, controlling the aforementioned bidirectional DC converter or the aforementioned pulse heating module so that the battery is charged during the first half of the first cycle of the pulse current for heating the battery.

In some embodiments, the method includes:
when the heating frequency requirement is less than a preset second frequency, controlling the aforementioned bidirectional DC converter so that energy released by the battery is fed back to the aforementioned DC source during battery discharging, wherein the preset second frequency is less than the preset first frequency.

In embodiments of the present application, because of the use of the bidirectional DC converter, it is possible to feed the electrical energy back to the DC source without storing the energy in the energy storage element of the DC converter, which reduces the requirement for the energy storage element in the DC converter as well as the switching devices.

In some embodiments, the aforementioned DC source includes a bidirectional rectifier connected to the power grid, the method including:
when the heating frequency requirement is less than a preset second frequency, controlling the aforementioned bidirectional rectifier and the aforementioned bidirectional DC converter so that energy released by the battery is fed back to the power grid during battery discharging, wherein the preset second frequency is less than the preset first frequency.

In some embodiments, the above DC source includes an energy storage apparatus. In embodiments of the present application, since the DC source includes an energy storage apparatus, energy may be fed back into the energy storage apparatus for storage when the pulse frequency is low; furthermore, the energy supplied to the battery to be heated may come from the energy storage apparatus without the involvement of a rectifier connected to the power grid. In some specific embodiments of the present application, the aforementioned energy storage apparatus may include an energy storage battery and/or a super-capacitor.

In some embodiments, the method includes:
when the heating frequency requirement is greater than or equal to a preset second frequency and less than the preset first frequency, controlling the aforementioned bidirectional DC converter so that energy released by the battery is stored in an energy storage element of the aforementioned bidirectional DC converter during battery discharging, wherein the preset second frequency is less than the preset first frequency.

In some embodiments, the aforementioned DC source includes a rectifier connected to the power grid, the method including:
monitoring the voltage of the battery; and
when the voltage of the battery is lower than a preset voltage threshold for an initial voltage of the battery, controlling the aforementioned rectifier to recharge the battery, wherein this initial voltage is a voltage when the battery starts to be heated.

In embodiments of the present application, the battery is recharged by a rectifier, making it possible to heat the battery by the pulse current even when the voltage of the battery is low, without resulting in a situation where the battery cannot be heated when the state of charge is low.

In some embodiments, the method includes:
when the battery is heated by the aforementioned bidirectional DC converter, controlling the aforementioned rectifier and the aforementioned bidirectional DC converter to adjust the balance between charging energy and discharging energy for pulse heating of the battery.

In some embodiments, the method includes:
when the battery is heated by the aforementioned pulse heating module, controlling the aforementioned rectifier so that an output voltage of the aforementioned rectifier is equal to a preset voltage value during charging of the battery by an energy storage element of the aforementioned pulse heating module, the preset voltage value being greater than or equal to the initial voltage of the battery.

In some embodiments, a plurality of bidirectional DC converters connected in parallel with each other are connected between the aforementioned DC source and the battery, and when the heating frequency requirement is less than the preset first frequency, the battery is heated by one or more of the aforementioned plurality of bidirectional DC converters.

In some embodiments, a plurality of pulse heating modules connected in parallel with each other are connected between the aforementioned DC source and the battery, and when the heating frequency requirement is greater than or equal to the preset first frequency, the battery is heated by one or more of the aforementioned plurality of pulse heating modules.

A third aspect of the present application provides a storage medium storing instructions which, when executed by a computing device, cause the aforementioned processor to implement the method for heating a battery as in the second aspect of the present application.

### Brief Description of Drawings

In order to illustrate the technical solutions of the present application more clearly, a brief introduction will be given below of the drawings that are required to be used in the examples of the present application. It is apparent that the drawings described below are only some embodiments of the present application, and for those of ordinary skill in the art, according to the drawings, other drawings can also be obtained without involving any creative efforts. In the accompanying drawings:
Fig. 1 illustrates a block diagram of a charging apparatus 100 according to an embodiment of the present application;
Fig. 2 illustrates a flowchart of a method 200 for heating a battery according to an embodiment of the present application;
Fig. 3 illustrates a block diagram of a charging apparatus 300 according to an embodiment of the present application;
Fig. 4 illustrates a block diagram of a charging apparatus 400 according to another embodiment of the present application;
Fig. 5 illustrates a flowchart of a method 500 for heating a battery according to another embodiment of the present application;
Fig. 6 illustrates a block diagram of a charging apparatus 600 according to another embodiment of the present application;
Fig. 7 illustrates a block diagram of a charging apparatus 700 according to yet another embodiment of the present application;
Fig. 8 illustrates a flowchart of a battery charging method 800 according to an embodiment of the present application;
Figs. 9a to 9e illustrate schematic diagrams of topological structures of a bidirectional DC converter in a charging apparatus according to the present application;
Figs. 10a and 10b illustrate schematic diagrams of the structure of a bidirectional DC converter in a charging apparatus according to the present application;
Figs. 11a to 11c illustrate waveform diagrams of different modulation strategies of the bidirectional DC converter of Fig. 10b; and
Figs. 12a to 12h illustrate the operation modes of the bidirectional DC converter of Fig. 10b under the modulation strategy of Fig. 11a.

### Detailed Description

Embodiments of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first" and "second", and the like are used only to distinguish between different objects, and are not to be understood as indicating or implying a relative importance or implicitly specifying the number, particular order, or primary and secondary relation of the technical features indicated, unless otherwise specified.

Reference herein to "embodiment" means that particular features, structures, or characteristics described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "a plurality of" refers to more than two (including two), unless otherwise expressly defined. In the description of the embodiments of the present application, unless otherwise expressly specified and limited, the technical terms "connected", "connection", etc., should be understood in a broad sense, for example, it may be a mechanical connection, or an electrical connection; it may be a direct connection, an indirect connection through an intermediate medium, an internal connection of two elements, or interaction between two elements. For those of ordinary skill in the art, the specific meanings of the above terms in the embodiments of the present application can be understood according to specific situations.

If steps are stated sequentially in this specification or claims, it does not necessarily mean that the embodiments or aspects are limited to the order in which they are stated. On the contrary, it is conceivable to also perform the steps in a different order or in parallel with each other, unless one step builds on another, which absolutely requires that the built step be performed subsequently (this will however become clear in individual cases). Therefore, the stated order may be the preferred embodiment.

At present, the batteries are used in energy storage power source systems such as hydraulic, thermal, wind and solar power stations as well as in electric vehicles such as electric bicycles, electric motorcycles and electric cars, and military equipment and aerospace fields. With continuous expansion of the application fields of batteries, the market demand is also constantly expanding.

The inventors of the present application have found, after research, that in-vehicle rapid heating solutions require additional costs for the vehicle and that in-vehicle rapid heating apparatuses are often only applicable to specific models. Different types of models may have different types of batteries, and different types of batteries may have different internal resistances and thus need to be heated with pulse currents of different frequencies and amplitudes, otherwise the batteries may suffer from lithium plating because lithium ions are too quickly deintercalated from the positive electrode but not embedded into the negative electrode in equal amounts.

In addition, the inventors of the present application have found that, when the power level of the battery is low, the remaining energy in the battery is not sufficient to heat the battery to a temperature at which it can be used. In addition, when the battery needs to be charged in a low-temperature environment, the user often needs to wait for a long time in the low-temperature environment until the battery is heated up to a temperature at which it can be charged, resulting in a very poor user experience.

Based on the above findings, in order to reduce the cost of the electrical apparatus loaded with the battery and to achieve rapid heating of the battery when the residual energy is low, the inventors have designed a charging apparatus which, by integrating the low-temperature rapid heating technology for batteries, can eliminate the rapid heating apparatus on the electrical apparatus side and select different apparatuses to generate pulse heating currents according to the heating frequency requirement of the battery so as to adapt to different types of batteries.

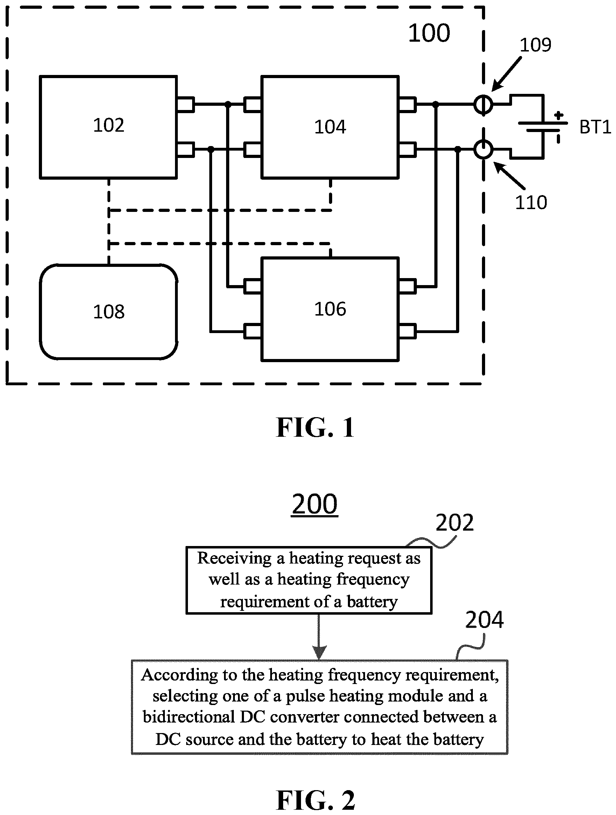

Fig. 1 illustrates a block diagram of a charging apparatus 100 according to an embodiment of the present application. As shown in Fig. 1, the charging apparatus 100 includes a DC source 102, a pulse heating module 104, a bidirectional DC converter 106 and a main controller 108. The pulse heating module 104 and the bidirectional DC converter 106 are connected between the DC source 102 and charging ports 109 and 110 of the charging apparatus 100, and the pulse heating module 104 and the bidirectional DC converter 106 are connected in parallel with each other. The charging ports 109 and 110 of the charging apparatus 100 are used to connect with a battery BT1. The main controller 108 controls the operation of the DC source 102, the pulse heating module 104, and the bidirectional DC converter 106.

The embodiment of Fig. 1 is further described below with reference to Fig. 2. Fig. 2 illustrates a flowchart of a method 200 for heating a battery according to an embodiment of the present application. As shown in Fig. 2, at step 202, a heating request as well as a heating frequency requirement of the battery BT1 are received. Then, in response to the heating request and according to the heating frequency requirement, one of the pulse heating module 104 and the bidirectional DC converter 106 connected between the DC source 102 and the battery BT1 is selected to heat the battery BT1, step 204.

In embodiments of the present application, the charging apparatus is used to heat a low-temperature battery, which can eliminate the need for an in-vehicle battery heating apparatus, thus realizing the pulse rapid heating function of the vehicle at a low temperature without increasing the cost of the vehicle. In addition, in embodiments of the present application, different heating apparatuses are selected according to the heating frequency requirement of the battery to heat the battery at different frequencies, thus enabling the charging apparatus to be applicable to heating various types of batteries, that is, applicable to various types of vehicles.

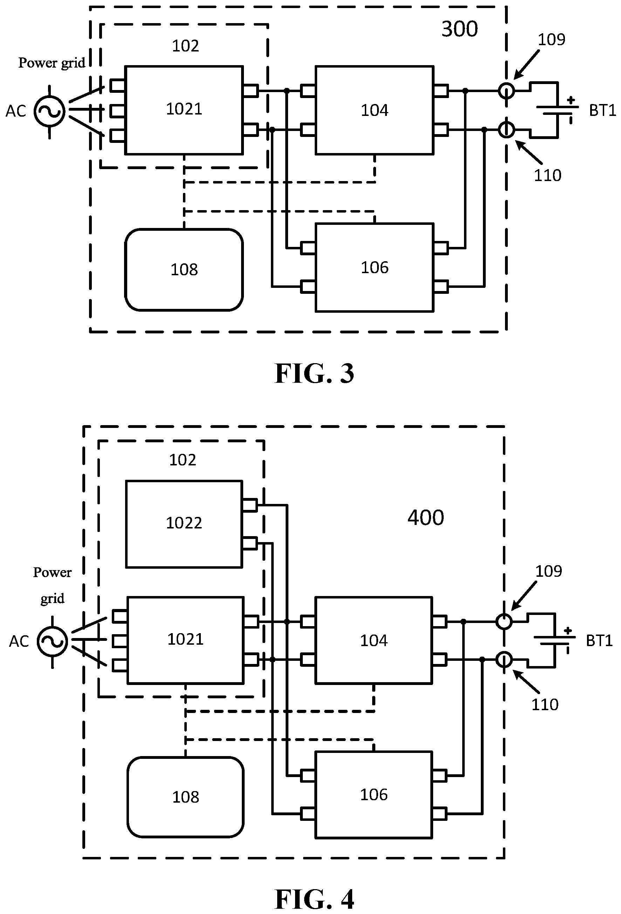

Fig. 3 illustrates a block diagram of a charging apparatus 300 according to an embodiment of the present application. As shown in Fig. 3, the DC source 102 includes a rectifier 1021. The AC side of the rectifier 1021 is used to connect to the power grid, and the DC side of the rectifier 1021 is connected to the pulse heating module 104 and the bidirectional DC converter 106.

Fig. 4 illustrates a block diagram of a charging apparatus 400 according to another embodiment of the present application. As shown in Fig. 4, the DC source 102 includes a rectifier 1021 and an energy storage apparatus 1022. The AC side of the rectifier 1021 is used to connect to the power grid, and the DC side of the rectifier 1021 is connected to the energy storage apparatus 1022, the pulse heating module 104, and the bidirectional DC converter 106. In this way, energy can be supplied to the battery BT1 by the energy storage apparatus 1022, or energy can be supplied to the battery BT1 by the power grid through the rectifier 1021. It should be understood that Fig. 4 is an exemplary embodiment of the present application, and in other embodiments of the present application, the DC source 102 may include only the energy storage apparatus 1022 or only the energy storage apparatus 1022. In some embodiments, the energy storage apparatus 1022 may include an energy storage battery and/or a super-capacitor.

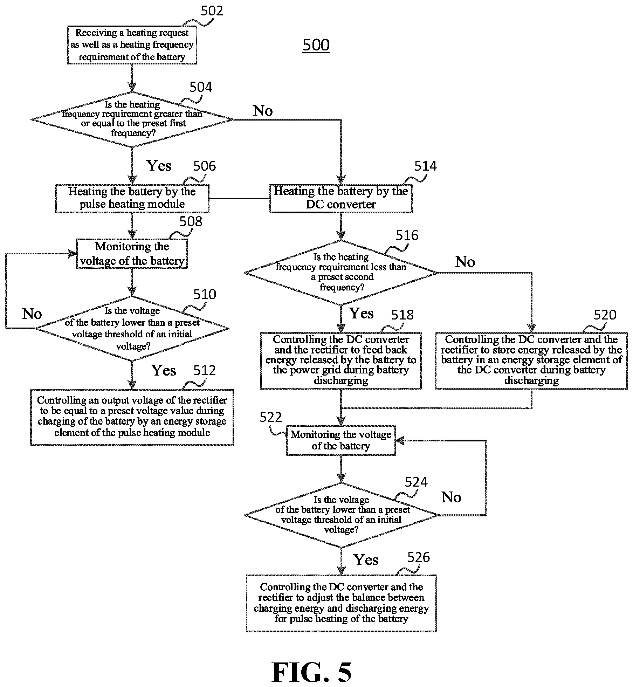

Fig. 5 illustrates a flowchart of a method 500 for heating a battery according to another embodiment of the present application. As shown in Fig. 5, at step 502, a heating request as well as a heating frequency requirement of the battery BT1 are received. Then, at step 504, it is judged whether the heating frequency requirement is greater than or equal to the preset first frequency. In some embodiments of the present application, the preset first frequency is 100 Hz. If the heating frequency requirement is greater than or equal to the preset first frequency, the flow proceeds to step 506 in which the battery BT1 is heated by the pulse heating module 104.

In some embodiments of the present application, when heating of the battery BT1 is started, the main controller 108 controls the pulse heating module 104 so that the battery BT1 is discharged during the first half of the first cycle of the pulse current for heating the battery BT1. The reason for such setting is that the inventors of the present application have observed the movement pattern of lithium ions in practice and found that at lower temperatures, there is not enough lithium intercalation space in the negative electrode of the battery, and if the battery is charged at this moment, the phenomenon of lithium plating may be caused. The inventors of the present application have also found that certain low-temperature battery cells also allow for charging for short periods of time, so in some other embodiments of the present application, when heating of the battery BT1 is started, the main controller 108 can control the pulse heating module 104 so that the battery BT1 is charged during the first half of the first cycle of the pulse current for heating the battery BT1.

During the heating of the battery BT1 by the pulse heating module 104, the voltage of the battery BT1 is monitored, step 508. At step 510, it is judged whether the voltage of the battery BT1 is lower than a preset voltage threshold of an initial voltage. If the voltage of the battery BT1 is lower than the preset voltage threshold of the initial voltage, an output voltage of the rectifier 1021 is controlled to be equal to a preset voltage value during charging of the battery BT1 by an energy storage element of the pulse heating module 104, step 512, the preset voltage value being greater than or equal to the initial voltage of the battery BT1. If the voltage of the battery BT1 is not lower than the preset voltage threshold of the initial voltage, the flow returns to step 508 to continue monitoring the voltage of the battery BT1. In some embodiments of the present application, this preset voltage value is slightly greater than the initial voltage of the battery BT1. In embodiments of the present application, the output voltage of the rectifier 1021 is controlled to be greater than or equal to the initial voltage of the battery BT1 during charging of the battery BT1, so that during charging, the battery BT1 can be replenished with the energy released and consumed, and the battery BT1 can reach energy balance during pulse charging and discharging, thus maintaining the voltage of the battery BT1 at the initial voltage.

If it is judged at step 504 that the heating frequency requirement is less than the preset first frequency, the flow proceeds to step 514 in which the battery BT1 is heated by the DC converter 106. In some embodiments of the present application, when heating of the battery BT1 is started, the main controller 108 controls the DC converter 106 so that the battery BT1 is discharged during the first half of the first cycle of the pulse current for heating the battery BT1. Because certain low-temperature battery cells also allow for charging for short periods of time, so in some other embodiments of the present application, when heating of the battery BT1 is started, the main controller 108 can control the DC converter 106 so that the battery BT1 is charged during the first half of the first cycle of the pulse current for heating the battery BT1.

In the case where the battery BT1 is heated by the DC converter 106, it is judged whether the heating frequency requirement is less than a preset second frequency, step 516. In some embodiments of the present application, the preset second frequency is 50 Hz; and it should be understood that the preset second frequency can be set to other frequency values according to actual needs. In some embodiments of the present application, the rectifier 1021 is a bidirectional rectifier, that is, the bidirectional rectifier 1021 can not only rectify the alternating current at the power grid side into direct current, but also reverse the direct current into alternating current and feed it back to the power grid. If the heating frequency requirement is less than the preset second frequency, the main controller 108 controls the DC converter 106 and the bidirectional rectifier 1021 to feedback energy released by the battery BT1 to the power grid during battery discharging, step 518. It should be understood that in some embodiments including the energy storage apparatus 1022, if the heating frequency requirement is less than the preset second frequency, pulse energy can be exchanged between the energy storage apparatus 1022 and the battery BT1 to heat the battery BT1. Specifically, the DC converter 106 is controlled to feed back energy released by the battery BT1 to the energy storage apparatus 1022 during battery discharging. If the heating frequency requirement is greater than or equal to the preset second frequency, the main controller 108 controls the DC converter 106 and the rectifier 1021 to store energy released by the battery BT1 in an energy storage element of the DC converter 106 during battery discharging, step 520.

During the heating of the battery BT1 by the DC converter 106, the voltage of the battery BT1 is monitored, step 522. At step 524, it is judged whether the voltage of the battery BT1 is lower than a preset voltage threshold of an initial voltage. If the voltage of the battery BT1 is lower than the preset voltage threshold of the initial voltage, the main controller 108 controls the DC converter 106 and the rectifier 1021 to adjust the balance between charging energy and discharging energy for pulse heating of the battery BT1, step 526. If the voltage of the battery BT1 is not lower than the preset voltage threshold of the initial voltage, the flow returns to step 522 to continue monitoring the voltage of the battery BT1. In some embodiments of the present application, this preset voltage value is slightly greater than the initial voltage of the battery BT1.

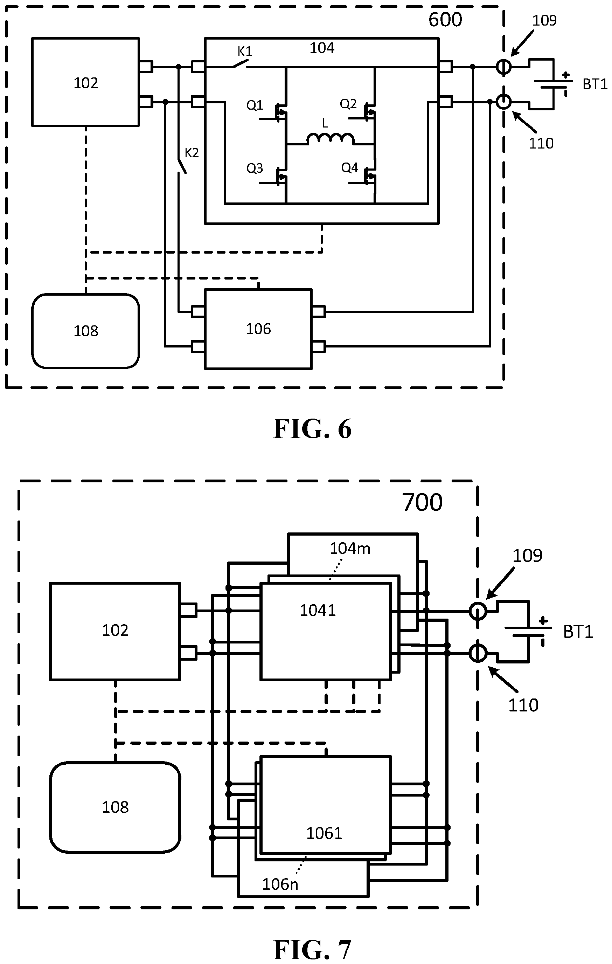

Fig. 6 illustrates a block diagram of a charging apparatus 600 according to another embodiment of the present application. As shown in Fig. 6, the pulse heating module 104 has four switch modules Q1-Q4, an inductor L, and a switch K1. The switch K1 is arranged on the positive bus of the input side of the pulse heating module 104, the switch modules Q1 and Q3 are connected in series between the positive bus and the negative bus of the pulse heating module 104, and the switch modules Q2 and Q4 are also connected in series between the positive bus and the negative bus of the pulse heating module 104, and the inductor L is connected between the connection midpoint of the switch modules Q1 and Q3 and the connection midpoint of the switch modules Q2 and Q4. In addition, the positive bus of the DC converter 106 is connected to the positive bus of the DC source 102 via a switch K2.

If it is judged at step 504 that the heating frequency requirement is greater than or equal to the preset first frequency, the main controller 108 controls the switch K1 to be closed and the switch K2 to be opened, so that the battery BT1 is heated by the pulse heating module 104. If it is judged at step 504 that the heating frequency requirement is less than the preset first frequency, the main controller 108 controls the switch K1 to be opened and the switch K2 to be closed, so that the battery BT1 is heated by the DC converter 106.

It should be understood that FIG. 6 illustrates an example embodiment of the present application. In other embodiments of the present application, the positive bus of the DC converter 106 is directly connected to the positive bus of the DC source 102 without passing through the switch K2, and when the heating frequency requirement is greater than or equal to the preset first frequency, the main controller 108 controls the switch K1 to be closed and all the switch modules in the DC converter 106 to be opened; and when the heating frequency requirement is less than the preset first frequency, the main controller 108 controls the switch K1 to be opened and controls the closing and opening of the switch modules in the DC converter 106 to heat the battery BT1.

During the heating of the battery BT1 by the pulse heating module 104, at time t1, the main controller 108 controls the switch modules Q1 and Q4 to be closed and Q2 and Q3 to be opened, so that the battery BT1 stores energy into the inductor L; then at time t2, the main controller 108 controls the switch modules Q1 and Q4 to be opened and Q2 and Q3 to be closed, so that the inductor L is discharged to the battery BT1; at time t3, the state of the switch modules at time t2 is maintained, and the battery BT1 stores energy into the inductor L again; and at time t4, the main controller 108 controls the switch modules Q1 and Q4 to be closed and Q2 and Q3 to be opened, so that the inductor L is discharged to the battery BT1. It should be understood that the pulse heating cycle may also start at time t3, travel through times t4 and 11, and end at time t2. In the embodiments of the present application, during the first cycle of generating the pulse current, the first half cycle must first start with the storage of energy by the battery BT1 to the inductor L, i.e., starting at time t1 or t3.

It should be understood that FIG. 6 illustrates an example embodiment of the present application. In addition to the topological structure illustrated in FIG. 6, the pulse heating module 104 may employ any other topological structures capable of implementing the pulse heating function.

Fig. 7 illustrates a block diagram of a charging apparatus 700 according to an embodiment of the present application. As shown in FIG. 7, the charging apparatus 500 includes a plurality of pulse heating modules 1041, 1042, ..., and 104m connected in parallel with each other, and when the heating frequency requirement is greater than or equal to the preset first frequency, the battery BT1 is heated by one or more of the plurality of pulse heating modules 1041, 1042, ..., and 104m. In addition, the charging apparatus 700 includes a plurality of DC converters 1061, 1062, ..., and 106n connected in parallel with each other, and when the heating frequency requirement is less than the preset first frequency, the battery BT1 is heated by one or more of the plurality of DC converters 1061, 1062, ..., and 106n. In addition, the battery BT1 may be charged by one or more of the plurality of DC converters 1061, 1062, ..., and 106n.

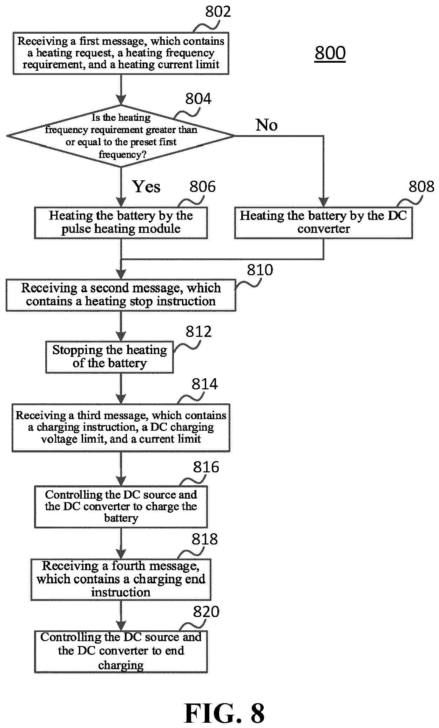

Fig. 8 illustrates a flowchart of a battery charging method 800 according to an embodiment of the present application. As shown in Fig. 8, at step 802, a first message is received, the first message containing a heating request, a heating frequency requirement, a heating current limit, and the like. Then, at step 804, it is judged whether the received heating frequency requirement is greater than or equal to the preset first frequency. If the heating frequency requirement is greater than or equal to the preset first frequency, the battery BT1 is heated by the pulse heating module 104, step 806. If the heating frequency requirement is less than the preset first frequency, the battery BT1 is heated by the DC converter 106, step 808. Then, at step 810, a second message is received, the second message containing a heating stop instruction. In response to the heating stop instruction, at step 812, the heating of the battery BT1 is stopped. At step 814, a third message is received, the third message containing a charging instruction, a DC charging voltage limit, a current limit, and the like. In response to the charging instruction, at step 816, the main controller 108 controls the DC source 102 and the DC converter 106 to charge the battery BT1 according to the DC charging voltage limit and current limit. Finally, at step 818, a fourth message is received, the fourth message containing a charging end instruction. In response to the charging end instruction, at step 820, the main controller 108 controls the DC source 102 and the DC converter 106 to end charging.

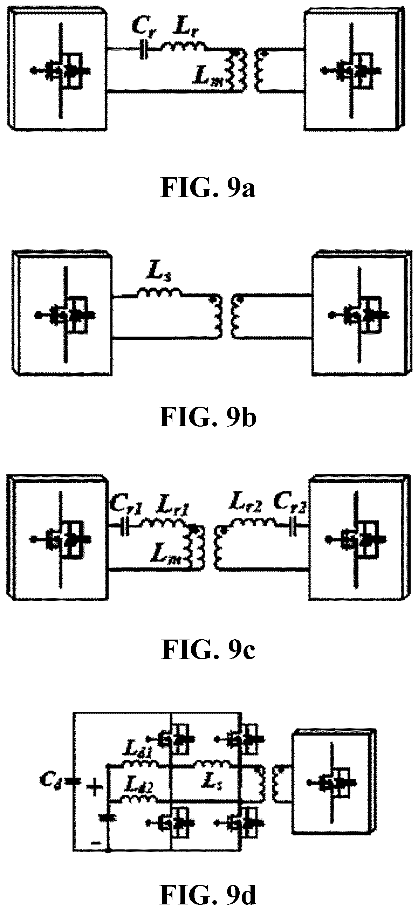

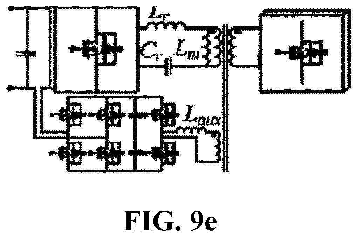

Figs. 9a to 9e illustrate schematic diagrams of five topological structures of a bidirectional DC converter in a charging apparatus according to the present application. Fig. 9a illustrates an LLC resonant DC converter, Fig. 9b illustrates a dual-active-bridge (DAB) DC converter, Fig. 9c illustrates a CLLC resonant DC converter, Fig. 9d illustrates a current-fed dual-active-bridge (CF-DAB) DC converter, and Fig. 9e illustrates a partial power converter (PPC). The bidirectional DC converter in the charging apparatus of the present application may employ the topological structures exemplified in Figs. 9a to 9e and various variants of these topological structures capable of achieving the functions described above.

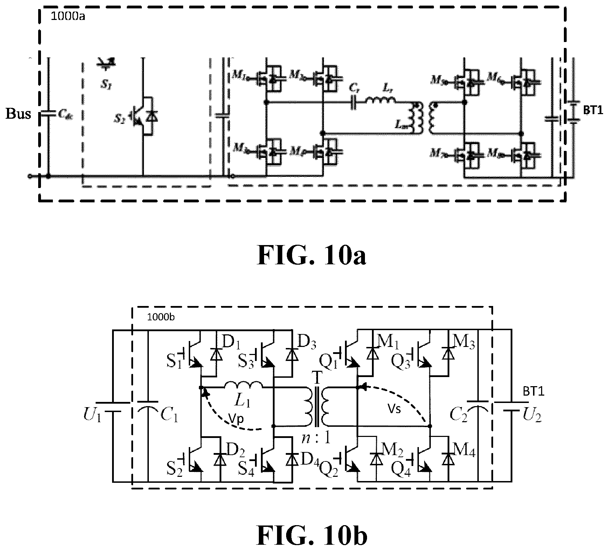

Figs. 10a and 10b illustrate schematic diagrams of the structure of a bidirectional DC converter in a charging apparatus according to the present application. Fig. 10a illustrates a two-stage LLC-type bidirectional DC converter 1000a, where the bus side of the DC converter is used to connect to the DC source 102, and the capacitor Cdc on the bus side is connected to a Buck-Boost circuit, and the back end of this Buck-Boost circuit is connected to a bidirectional LLC series resonant converter (LLC-SRC), and the bidirectional LLC-SRC is then connected to the battery BT1. The two-stage LLC-type bidirectional DC converter has two stages of voltage control, where the Buck-Boost circuit can control the duty cycles of the switch modules S1 and S2 to achieve boost or buck as needed, and the bidirectional LLC-SRC achieves further voltage control to ensure a constant voltage supplied to the battery. The bidirectional LLC-SRC adopts frequency control, and for each bridge arm thereof, the duty cycles of the upper and lower switch modules M1-M8 are all 50%, and when the system load changes, the operating frequency of the system needs to be changed. Specifically, when the load increases, the switching frequency of the switch modules M1-M8 is reduced, and when the load decreases, the switching frequency of the switch modules M1-M8 is increased. The LLC circuit in the bidirectional LLC-SRC includes a capacitor Cr as well as inductors Lr and Lm, where the capacitor Cr and the inductor Lr are regarded as one part and their impedance is set to Zr, and the inductor Lm is regarded as the other part and its impedance is set to Zo; when the system load changes, the switching frequency of the switch modules M1-M4 is changed, and the voltage division ratio of Zr and Zo can be changed to make the output voltage stable.

Similar to the description above with reference to FIG. 6 regarding the generation of pulse current by the pulse heating module 104, for example, during the heating of the battery BT1 by the two-stage LLC-type bidirectional DC converter 1000a of FIG. 10a, at time t1, the main controller 108 controls the switch modules M5 and M8 to be closed and M6 and M7 to be opened, so that the battery BT1 stores energy into the secondary winding of the transformer of the bidirectional LLC-SRC; then at time t2, the main controller 108 controls the switch modules M5 and M8 to be opened and M6 and M7 to be closed, so that the secondary winding of the transformer is discharged to the battery BT1; at time t3, the state of the switch modules at time t2 is maintained, and the battery BT1 stores energy into the secondary winding of the transformer again; and at time t4, the main controller 108 controls the switch modules M5 and M8 to be closed and M6 and M7 to be opened, so that the secondary winding is discharged to the battery BT1. The lower the switching frequency of the switch modules M5-M8, the higher the current generated in the secondary winding of the transformer, and thus the higher the power. It should be understood that the bidirectional LLC-SRC can employ other control strategies that are suitable for generating pulse currents to heat the battery.

Fig. 10b illustrates a dual-active-bridge DC converter 1000b, which includes a U1-side full-bridge circuit, an inductor L1, a transformer T, and a U2-side full-bridge circuit. The DC bus of the U1-side full-bridge circuit is connected to the DC source 102, the inductor L1 and the primary winding of the transformer T are connected in series between the midpoints of the two bridge arms of the U1-side full-bridge circuit, the secondary winding of the transformer T is connected between the midpoints of the two bridge arms of the U2-side full-bridge circuit, and the DC bus of the U2-side full-bridge circuit is connected to the battery BT1.

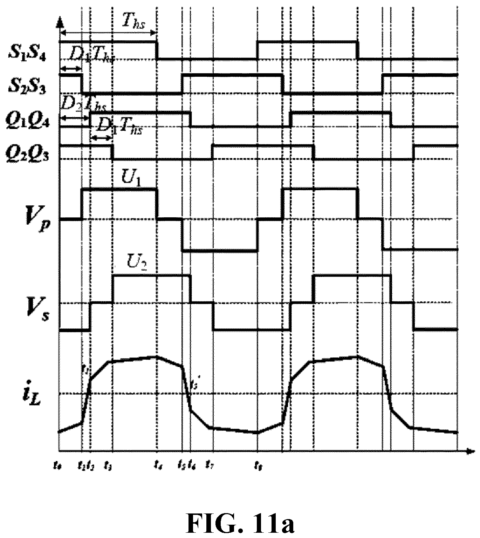

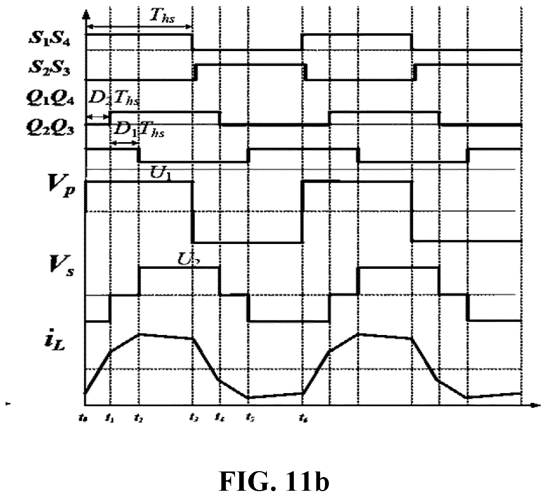

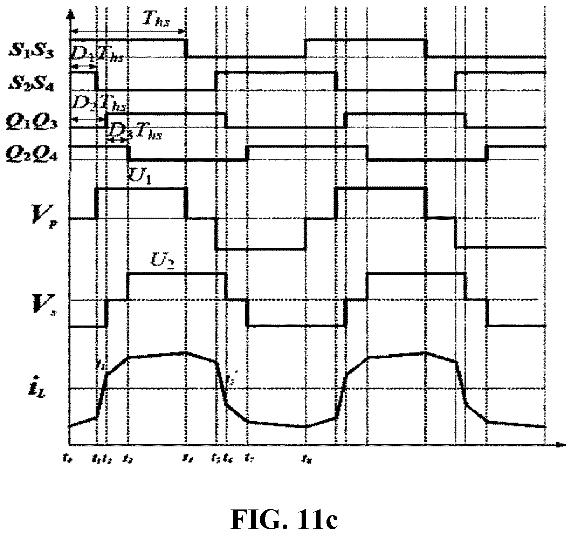

Figs. 11a to 11c illustrate waveform diagrams of different modulation strategies of the bidirectional DC converter 1000b of Fig. 10b. Fig. 11a illustrates a waveform diagram of a dual-phase-shifting (DPS) modulation strategy of a dual-active-bridge DC converter; Fig. 11b illustrates a waveform diagram of an extended-phase-shifting (EPS) modulation strategy of a dual-active-bridge DC converter; and Fig. 11c illustrates a waveform diagram of triple-phase-shifting (TPS) modulation strategy of a dual-active-bridge DC converter.

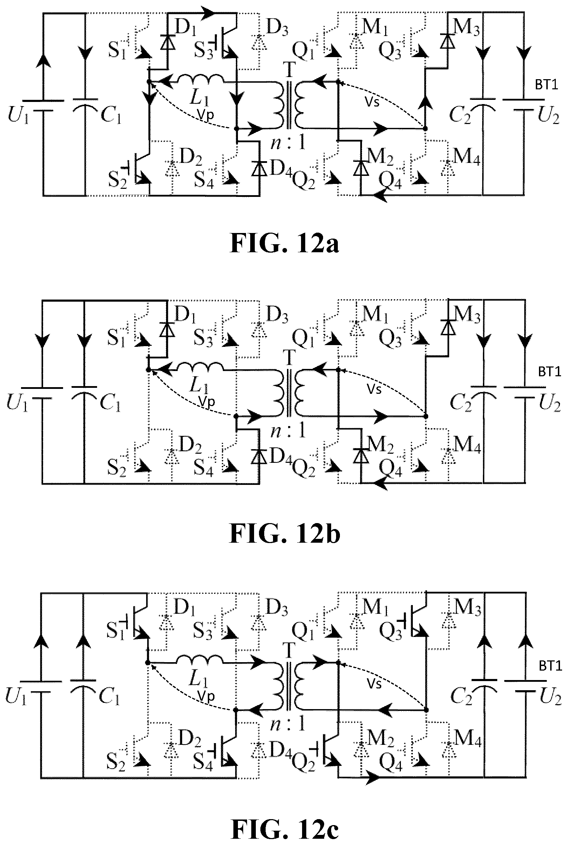

Corresponding to the waveform shown in Fig. 11a, the operation mode of the dual-active-bridge DC converter 1000b of Fig. 10b can be classified into 8 operation states of Figs. 12a to 12h.

Mode 1 is as shown in Fig. 12a. In the t0-t1 stage: before the time t0, switches S1 and S4 are opened and S2 and S3 are closed, and the current iL on the inductor L1 is negative; at the time t0, switches S1 to S4 are closed and S2 and S3 remain closed, and VP is 0, and since the current iL is still negative, the current is renewed through the switch S3 and the diode D1 or through the switch S2 and the diode D4; and in the U2-side full-bridge circuit, the switches Q1 and Q4 are opened and Q2 and Q3 are closed, and since the current iL is negative, the current on the U2 side feeds energy to the battery BT1 through diodes M2 and M3 and the current iL gradually decreases.

Mode 2 is as shown in Fig. 12b. In the t1-t1' stage: at the time 11, the current iL is still less than 0, switches S2 and S3 are opened and S1 and S4 remain closed, and the current iL changes to be renewed via diodes D1 and D4, with Vp being equal to U1; and the switching state of the U2-side full-bridge circuit is the same as in mode 1, and the inductor L1 feeds energy to the battery BT1 on the U2 side as well as to the U1 side at the same time, until the current iL drops to zero at the time t1'.

Mode 3 is as shown in Fig. 12c. In the t1'-t2 stage: at the time t1', the current iL changes from negative to positive, the switches S1 and S4 and Q2 and Q3 are closed and the current flows through these four switches, the DC source on the U1 side and the battery BT1 on the U2 side feed energy to the inductor L1 at the same time, so that the current iL increases rapidly.

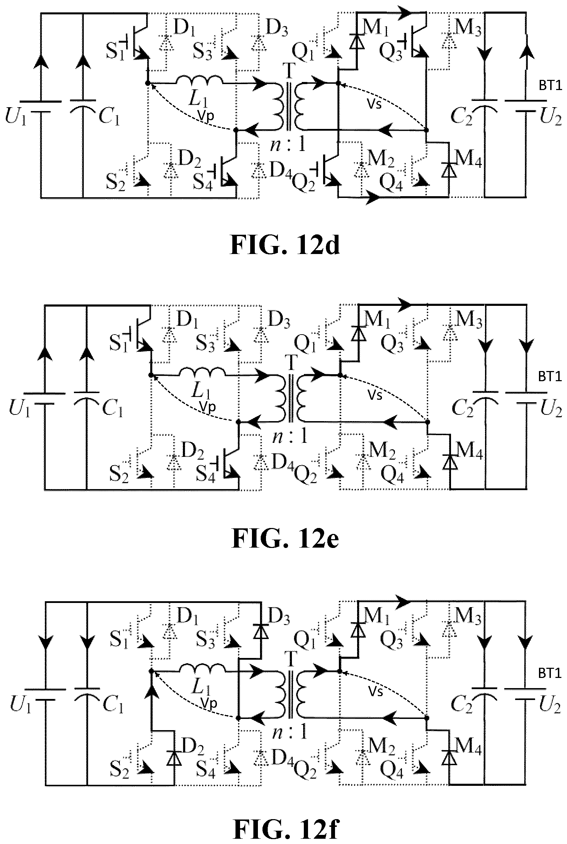

Mode 4 is as shown in Fig. 12d. In the t2-t3 stage: at the time t2, the switches Q1 and Q4 are closed and Q2 and Q3 remain closed, VS is 0, and the current on the U2 side is renewed through the switch Q2 and the diode M4 or through the switch Q3 and the diode M1; and the current iL is positive, the switching state of the U1-side full-bridge circuit is the same as in mode 3, and the DC source on the U1 side feeds energy to the inductor L1, so that the current iL increases and the gradient decreases.

Mode 5 is as shown in Fig. 12e. In the t3-t4 stage: at time t3, the switches Q2 and Q3 are opened and Q1 and Q4 remain closed, VS is equal to U2, and since the current iL is positive, the current on the U2 side provides energy to the battery BT1 through the diodes M1 and M4; and the switching state of the U1-side full-bridge circuit is the same as in mode 3, and the DC source on the U1 side feeds energy to the inductor L1, and the current iL increases or decreases according to the energy difference between the energy received from the U1 side and the energy supplied to battery BT1.

Mode 6 is as shown in Fig. 12f. In the t4-t5' stage: at time t4, switches S1 and S4 are opened and S2 and S3 remain opened, the current iL is positive and changes to be renewed through diodes D2 and D3, the inductor L1 feeds energy to the DC source on the U1 side, the switching state of the U2-side full-bridge circuit is the same as in mode 5, the current on the U2 side feeds energy to the battery BT1 through diodes M1 and M4, so that the current iL decreases; and at time t5, the switches S2 and S3 are closed and S1 and S4 remain opened, the current iL is still renewed through diodes D2 and D3, the inductor L1 feeds energy to the DC source on the U1 side and the battery BT1 at the same time, and the current iL decreases until the current iL drops to zero at time t5'.

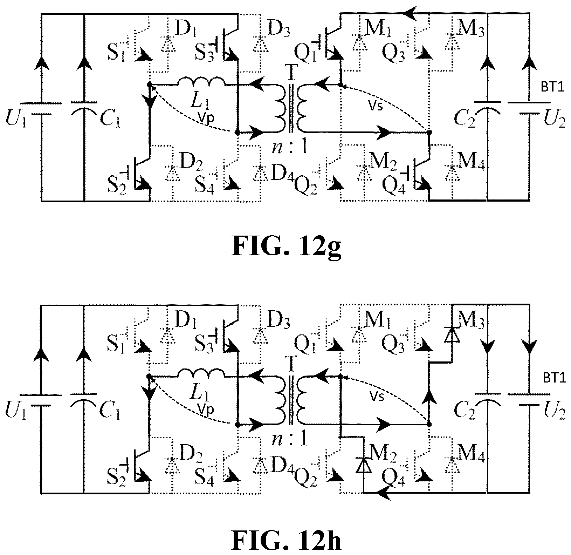

Mode 7 is as shown in Fig. 12g. In the t5'-t6 stage: at the time t5', the current iL changes from positive to negative, the switches S2 and S3 and Q1 and Q4 are closed and the current flows through these four switches, the DC source on the U1 side and the battery BT1 on the U2 side feed energy to the inductor L1 at the same time, so that the current iL increases rapidly.

Mode 8 is as shown in Fig. 12h. In the t6-t8 stage: at time t6, switches Q1 and Q4 are opened and Q2 and Q3 remain opened, and since the current iL is negative, the current on the U2 side feeds energy to the battery BT1 through diodes M2 and M3; the switching state of the U1-side full-bridge circuit is the same as in mode 7, and the DC source on the U1 side feeds energy to the inductor L1, and the current iL increases and the gradient decreases; and at time t7, switches Q2 and Q3 are closed and Q1 and Q4 remain opened, and the current on the U2 side still feeds energy to the battery BT1 through diodes M2 and M3.

In some embodiments of the present application, in the case of heating the battery BT1 via the dual-active-bridge DC converter 1000b, the heating pulse cycle may start in mode 3 or mode 7. In addition, in some embodiments of the present application, the waveform of the heating pulse current for the battery BT1 can be adjusted by adjusting the phase shift ratios of the U1-side full-bridge circuit and the U2-side full-bridge circuit and the voltage of the DC source on the U1 side.

Similarly, the person skilled in the art can also infer the operation modes of the extended-phase-shifting modulation strategy and the triple-phase-shifting modulation strategy based on the waveforms of FIG. 11b and FIG. 11c, which will not be repeated here. It should be understood that in addition to the modulation strategies exemplified in Figs. 11a to 11c, the dual-active-bridge DC converter 1000b may employ other control strategies suitable for generating pulse currents to heat the battery.

Although the present invention has been described with reference to the preferred examples, various improvements can be made thereto and components thereof can be replaced with equivalents without departing from the scope of the present invention. In particular, the technical features mentioned in the various embodiments can be combined in any manner as long as there is no structural conflict. The present invention is not limited to the specific examples disclosed herein, but rather comprises all technical solutions falling within the scope of the claims.

## Claims

1. A charging apparatus, wherein the charging apparatus comprises:
a direct current (DC) source;
a bidirectional DC converter connected between the DC source and a charging port of the charging apparatus;
a pulse heating module connected in parallel with the bidirectional DC converter; and
a controller configured for:
selecting, when a heating request is received and according to a heating frequency requirement of a battery, one of the pulse heating module and the bidirectional DC converter to heat the battery.

2. The charging apparatus according to claim 1, wherein the controller is configured for:
when the heating frequency requirement is less than a preset first frequency, selecting the bidirectional DC converter to heat the battery; and
when the heating frequency requirement is greater than or equal to the preset first frequency, selecting the pulse heating module to heat the battery.

3. The charging apparatus according to claim 1 or 2, wherein the controller is configured for:
when the heating frequency requirement is less than a preset second frequency, controlling the bidirectional DC converter so that energy released by the battery is fed back to the DC source during battery discharging, wherein the preset second frequency is less than the preset first frequency.

4. The charging apparatus according to any one of claims 1 to 3, wherein the DC source comprises a bidirectional rectifier connected to the power grid, and the controller is configured for:
when the heating frequency requirement is less than a preset second frequency, controlling the bidirectional rectifier and the bidirectional DC converter so that energy released by the battery is fed back to the power grid during battery discharging, wherein the preset second frequency is less than the preset first frequency.

5. The charging apparatus according to any one of claims 1 to 4, wherein the DC source comprises an energy storage apparatus.

6. The charging apparatus according to any one of claims 1 to 5, wherein the controller is configured for:
when the heating frequency requirement is greater than or equal to a preset second frequency and less than the preset first frequency, controlling the bidirectional DC converter so that energy released by the battery is stored in an energy storage element of the bidirectional DC converter during battery discharging, wherein the preset second frequency is less than the preset first frequency.

7. The charging apparatus according to any one of claims 1 to 6, wherein the DC source comprises a rectifier connected to the power grid, the charging apparatus is configured for monitoring the voltage of the battery, and the controller is configured for:
when the voltage of the battery is lower than a preset voltage threshold for an initial voltage of the battery, controlling the rectifier to recharge the battery, wherein the initial voltage is a voltage when the battery starts to be heated.

8. The charging apparatus according to claim 7, wherein when the battery is heated by the bidirectional DC converter, the controller is configured for controlling the rectifier and the bidirectional DC converter to adjust the balance between charging energy and discharging energy for pulse heating of the battery; and
when the battery is heated by the pulse heating module, the controller is configured for controlling the rectifier so that an output voltage of the rectifier is equal to a preset voltage value during charging of the battery by an energy storage element of the pulse heating module, the preset voltage value being greater than or equal to the initial voltage of the battery.

9. The charging apparatus according to any one of claims 1 to 8, wherein the charging apparatus comprises a plurality of bidirectional DC converters connected in parallel with each other, and when the heating frequency requirement is less than the preset first frequency, the battery is heated by one or more of the plurality of bidirectional DC converters.

10. The charging apparatus according to any one of claims 1 to 9, wherein the charging apparatus comprises a plurality of pulse heating modules connected in parallel with each other, and when the heating frequency requirement is greater than or equal to the preset first frequency, the battery is heated by one or more of the plurality of pulse heating modules.

11. A method for heating a battery, wherein the method comprises:
receiving a heating request as well as a heating frequency requirement of a battery; and
in response to the heating request and according to the heating frequency requirement, selecting one of a pulse heating module and a bidirectional DC converter connected between a DC source and the battery to heat the battery.

12. The method according to claim 11, wherein the method comprises:
when the heating frequency requirement is less than a preset first frequency, heating the battery by the bidirectional DC converter; and
when the heating frequency requirement is greater than or equal to the preset first frequency, heating the battery by the pulse heating module.

13. The method according to claim 11 or 12, wherein the method comprises:
when the heating frequency requirement is less than a preset second frequency, controlling the bidirectional DC converter so that energy released by the battery is fed back to the DC source during battery discharging, wherein the preset second frequency is less than the preset first frequency.

14. The method according to any one of claims 11 to 13, wherein the DC source comprises a bidirectional rectifier connected to the power grid, and the method comprises:
when the heating frequency requirement is less than a preset second frequency, controlling the bidirectional rectifier and the bidirectional DC converter so that energy released by the battery is fed back to the power grid during battery discharging, wherein the preset second frequency is less than the preset first frequency.

15. The method according to any one of claims 11 to 14, wherein the DC source comprises an energy storage apparatus.

16. The method according to any one of claims 11 to 15, wherein the method comprises:
when the heating frequency requirement is greater than or equal to a preset second frequency and less than the preset first frequency, controlling the bidirectional DC converter so that energy released by the battery is stored in an energy storage element of the bidirectional DC converter during battery discharging, wherein the preset second frequency is less than the preset first frequency.

17. The method according to any one of claims 11 to 16, wherein the DC source comprises a rectifier connected to the power grid, and the method comprises:
monitoring the voltage of the battery; and
when the voltage of the battery is lower than a preset voltage threshold for an initial voltage of the battery, controlling the rectifier to recharge the battery, wherein the initial voltage is a voltage when the battery starts to be heated.

18. The method according to claim 17, wherein the method comprises:
when the battery is heated by the bidirectional DC converter, controlling the rectifier and the bidirectional DC converter to adjust the balance between charging energy and discharging energy for pulse heating of the battery; and
when the battery is heated by the pulse heating module, controlling the rectifier so that an output voltage of the rectifier is equal to a preset voltage value during charging of the battery by an energy storage element of the pulse heating module, the preset voltage value being greater than or equal to the initial voltage of the battery.

19. The method according to any one of claims 11 to 18, wherein a plurality of bidirectional DC converters connected in parallel with each other are connected between the DC source and the battery, and when the heating frequency requirement is less than the preset first frequency, the battery is heated by one or more of the plurality of bidirectional DC converters.

20. The method according to any one of claims 11 to 19, wherein a plurality of pulse heating modules connected in parallel with each other are connected between the rectifier and the battery, and when the heating frequency requirement is greater than or equal to the preset first frequency, the battery is heated by one or more of the plurality of pulse heating modules.

21. A storage medium, wherein the storage medium stores instructions which, when executed by a computing device, cause the computing device to implement the method for heating a battery according to any one of claims 11 to 20.
